# EUROPEAN PATENT APPLICATION

(11) **EP 4 823 207 A1**
(43) Date of publication of application: **14.10.2026**
(21) Application number: 25736203.8
(22) Date of filing: 02.01.2025
(51) Int. Cl.: H04W 72/0453

(54) **NETWORK ACCESS METHOD AND APPARATUS, AND TERMINAL DEVICE, BASE STATION AND READABLE STORAGE MEDIUM**

(30) Priority: 02.01.2024 CN 202410009938
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Xiaoman, Beijing 100053 (CN); XU, Xiaodong, Beijing 100053 (CN); XIE, Fang, Beijing 100053 (CN); CHAI, Li, Beijing 100053 (CN); CHEN, Ningyu, Beijing 100053 (CN)
(74) Representative: J A Kemp LLP
(86) International application number: PCT/CN2025/070254
(87) International publication number: WO 2025/146102

(57) **Abstract**

The present application relates to the technical field of connections. Disclosed are a network access method and apparatus, and a terminal device, a base station and a readable storage medium, which aim to solve the problem in the related art of signaling resources being wasted due to preliminary operations for establishing a connection between a UE and a network side being ineffective. The method comprises: when a terminal device is about to initially access a network, sending first information to a base station, wherein the first information is used for indicating information related to an access request; and receiving a first feedback message sent by the base station, wherein the first feedback message is determined on the basis of the first information, and the first feedback message carries information related to access resources. The embodiments of the present application can avoid ineffective preliminary operations for establishing a connection between a UE and a network side in the related art, thereby saving signaling interaction resources.

## Description

### CROSS-REFERENCE TO RELATED APPLICATION

The present invention is proposed based on Chinese patent application No. 202410009938.3, filed on January 2, 2024, and claims the priority of the Chinese patent application. The disclosure of the Chinese patent application is hereby incorporated by reference in its entirety.

### TECHNICAL FIELD

The present disclosure relates to the field of communication technology, and in particular, to a method for network access, apparatus, terminal device, base station, and readable storage medium.

### BACKGROUND ART

With the evolution of communication technology, the network side will simultaneously deploy different Radio Access Technologies (RATs). For example, the 4th Generation Mobile Communication Technology (4G) and the 5th Generation Mobile Communication Technology (5G) are deployed simultaneously. Similar to the 5G voice fallback mechanism, functions supported by different RATs may differ or have advantages and disadvantages. Therefore, it is necessary to allow a User Equipment (UE) to access a cell of another RAT to complete a certain service through fallback or redirection.

In the Evolved Packet System (EPS) fallback mechanism for 5G voice, the service request during voice establishment is sent in Message 5 (Msg5) when the UE enters the connected state. That is, to bring the UE into the connected state, both the network side and the UE perform necessary procedures such as resource configuration and protocol stack establishment. Redirection, however, requires releasing the UE back to the idle state, and then the UE reselects an appropriate cell based on the reselection priority information carried in the release message.

It can be seen that the preliminary operations for establishing a connection between the UE and the network side are useless, causing a waste of signaling resources.

### SUMMARY OF THE INVENTION

The embodiments of the present disclosure provide a method for network access, apparatus, terminal device, base station, and readable storage medium to solve the problem in the related art that the preliminary operations for establishing a connection between the UE and the network side are useless, causing a waste of signaling resources.

In a first aspect, an embodiment of the present disclosure provides a method for network access, performed by a terminal device, the method comprising:
when the terminal device is about to initially access a network, sending first information to a base station, wherein the first information is used to indicate access request related information;
receiving a first feedback message sent by the base station, wherein the first feedback message is determined based on the first information, and the first feedback message carries access resource related information.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

Optionally, the method further comprises:
performing network access based on the cell access resource information;
or, the access resource related information comprises first uplink scheduling resource information, and the method further comprises:
sending a resource acquisition request to the base station based on the first uplink scheduling resource information;
receiving cell access resource information comprising access resource information of a second cell sent by the base station, wherein the second cell is another cell other than the serving cell corresponding to the base station;
performing network access based on the cell access resource information.

Optionally, the first information is carried in message MSG1, MSG3, or MSG5.

Optionally, the first information is indicated by a preconfigured preamble and/or a Random Access Channel (RACH) resource in MSG1;
or, the first information is indicated by a designated field in MSG3, wherein the designated field comprises at least one of a designated Logical Channel Identity (LCID), a designated bit or a designated bit sequence;
or, the first information is carried in terminal capability information and/or a Scheduling Request (SR) in MSG5.

Optionally, before sending the first information to the base station, the method further comprises:
sending second information to the base station, wherein the second information is used to indicate the base station to allocate uplink scheduling resources for the terminal device, and/or to indicate that the terminal device supports access in multiple cells;
in a case where the second information is used to indicate the base station to allocate uplink scheduling resources for the terminal device, the method further comprises:
receiving second uplink scheduling resource information sent by the base station, wherein the second uplink scheduling resource information comprises at least one of scheduling information for MSG3 or uplink scheduling resources;
the sending the first information to the base station comprises:
   sending the first information to the base station based on the second uplink scheduling resource information.

Optionally, before sending the first information to the base station, the method further comprises:
receiving third information sent by the base station, wherein the third information comprises service information supported by different cells or frequency points, and/or the third information is used to indicate that the base station supports cooperative work;
the sending the first information to the base station comprises:
   sending the first information to the base station based on the third information.

Optionally, the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells;
cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

Optionally, the performing network access based on the cell access resource information comprises at least one of:
in a case where the cell access resource information only comprises the access resource information of the first cell, accessing the first cell based on the access resource information of the first cell;
in a case where the cell access resource information only comprises the access resource information of the second cell, terminating access to the first cell, and accessing the second cell based on the access resource information of the second cell;
in a case where the cell access resource information comprises the access resource information of the first cell and the access resource information of the second cell, accessing the first cell and the second cell respectively based on the access resource information of the first cell and the access resource information of the second cell.

Optionally, the cell access resource information only comprises the access resource information of the second cell;
the performing network access based on the cell access resource information comprises:
initiating an access request to the second cell, wherein the access request carries fourth information, and the fourth information is used to indicate that the access request is initiated based on an indication from a cell other than the second cell.

In a second aspect, an embodiment of the present disclosure further provides a method for network access, performed by a base station, the method comprising:
receiving first information sent by a terminal device, wherein the first information is used to indicate access request related information;
determining a first feedback message according to the first information, wherein the first feedback message carries access resource related information;
sending the first feedback message to the terminal device.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the cell access resource information comprises at least one of access resource information of a first cell or access resource information of a second cell, wherein the first cell is a serving cell corresponding to the base station, and the second cell is another cell other than the first cell.

Optionally, the determining a first feedback message according to the first information comprises:
determining the cell access resource information or the first uplink scheduling resource information according to the first information;
the sending the first feedback message to the terminal device comprises:
   sending the first feedback message carrying the cell access resource information or the first uplink scheduling resource information to the terminal device;
   or, the determining a first feedback message according to the first information comprises:
      determining the cell access resource information according to the first information;
      the sending the first feedback message to the terminal device comprises:
         initiating access registration of the terminal device to the cell corresponding to the cell access resource information, and sending the first feedback message carrying cell registration information to the terminal device, wherein the cell registration information is registration information of the cell corresponding to the cell access resource information.

Optionally, in a case where the first feedback message carries the first uplink scheduling resource information, after sending the first feedback message to the terminal device, the method further comprises:
receiving a resource acquisition request sent by the terminal device based on the first uplink scheduling resource information;
in response to the resource acquisition request, sending cell access resource information comprising access resource information of the second cell to the terminal device.

Optionally, the first information is carried in MSG1, MSG3, or MSG5.

Optionally, the first information is indicated by a preconfigured preamble and RACH resource in MSG1;
or, the first information is indicated by a designated field in MSG3, wherein the designated field comprises at least one of a designated Logical Channel Identity (LCID), a designated bit or a designated bit sequence;
or, the first information is carried in terminal capabilities and/or a Scheduling Request (SR) in MSG5.

Optionally, before receiving the first information sent by the terminal device, the method further comprises:
receiving second information sent by the terminal device, wherein the second information is used to indicate the base station to allocate uplink scheduling resources for the terminal device, and/or indicate that the terminal device supports access in multiple cells.

Optionally, in a case where the second information is used to indicate the base station to allocate uplink scheduling resources for the terminal device, the method further comprises:
sending second uplink scheduling resource information to the terminal device based on the second information, wherein the second uplink scheduling resource information comprises at least one of scheduling information for MSG3 or uplink scheduling resources;
the receiving first information sent by a terminal device comprises:
   receiving the first information sent by the terminal device based on the second uplink scheduling resource information.

Optionally, before receiving the first information sent by the terminal device, the method further comprises:
sending third information to the terminal device, wherein the third information comprises service information supported by different cells or frequency points, and/or the third information is used to indicate that the base station supports cooperative work.

Optionally, the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
the first uplink scheduling resource information comprises at least one of:
   scheduling information for an uplink message;
   uplink scheduling resources;
   a first indication bit, used to indicate the terminal device to continue receiving uplink scheduling resources;
   access indication information, used to indicate whether the terminal device performs access in the first cell and other cells;
   cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

In a third aspect, an embodiment of the present disclosure further provides an apparatus for network access, provided in a terminal device, the network access apparatus comprising:
a first sending module, configured to, when the terminal device is about to initially access a network, send first information to a base station, wherein the first information is used to indicate access request related information;
a first receiving module, configured to receive a first feedback message sent by the base station, wherein the first feedback message is determined based on the first information, and the first feedback message carries access resource related information.

In a fourth aspect, an embodiment of the present disclosure further provides an apparatus for network access, provided in a base station, the network access apparatus comprising:
a fifth receiving module, configured to receive first information sent by a terminal device, wherein the first information is used to indicate access request related information;
a determining module, configured to determine a first feedback message according to the first information, wherein the first feedback message carries access resource related information;
a fourth sending module, configured to send the first feedback message to the terminal device.

In a fifth aspect, an embodiment of the present disclosure further provides a terminal device, comprising a transceiver and a processor, wherein
the transceiver is configured to, when the terminal device is about to initially access a network, send first information to a base station, wherein the first information is used to indicate access request related information;
the transceiver is further configured to receive a first feedback message sent by the base station, wherein the first feedback message is determined based on the first information, and the first feedback message carries access resource related information.

In a sixth aspect, an embodiment of the present disclosure further provides a base station, characterized by comprising a transceiver and a processor, wherein
the transceiver is configured to receive first information sent by a terminal device, wherein the first information is used to indicate access request related information;
the processor is configured to determine a first feedback message according to the first information, wherein the first feedback message carries access resource related information;
the transceiver is further configured to send the first feedback message to the terminal device.

In a seventh aspect, an embodiment of the present disclosure further provides a terminal device, comprising: a transceiver, a memory, a processor, and a computer program stored on the memory and executable on the processor, wherein the processor executes the computer program to implement the steps in the method for network access according to the first aspect.

In an eighth aspect, an embodiment of the present disclosure further provides a base station, comprising: a transceiver, a memory, a processor, and a computer program stored on the memory and executable on the processor, wherein the processor executes the computer program to implement the steps in the method for network access according to the second aspect.

In a ninth aspect, an embodiment of the present disclosure further provides a computer-readable storage medium, wherein the computer-readable storage medium stores a computer program, and when the computer program is executed by a processor, the steps in the method for network access according to the first aspect are implemented; or the steps in the method for network access according to the second aspect are implemented.

In a tenth aspect, an embodiment of the present disclosure further provides a computer program product, comprising a computer program, wherein when the computer program is executed by a processor, the steps in the method for network access according to the first aspect are implemented; or the steps in the method for network access according to the second aspect are implemented.

In the embodiments of the present disclosure, when the terminal device is about to initially access a network, it sends first information to a base station, the first information being used to indicate access request related information; and receives a first feedback message sent by the base station, wherein the first feedback message is determined based on the first information, and the first feedback message carries access resource related information.

The base station receives information sent by the terminal device, wherein the first information is used to indicate access request related information; determines a first feedback message according to the first information, wherein the first feedback message carries access resource related information; and sends the first feedback message to the terminal device.

In this way, by reporting relevant indication information to the base station when initially accessing the network, the terminal device enables the base station to provide corresponding access resource related information according to the indication information, thereby avoiding redirection to another cell for access after the RRC establishment of the terminal device is completed. That is, the useless preliminary operations for establishing a connection between the UE and the network side in the related art are avoided, saving signaling interaction resources.

### BRIEF DESCRIPTION OF THE DRAWINGS

In order to more clearly illustrate the technical solutions of the embodiments of the present disclosure, the accompanying drawings required in the description of the embodiments of the present disclosure will be briefly introduced below. Obviously, the accompanying drawings in the following description are only some embodiments of the present disclosure. For those of ordinary skill in the art, other drawings can also be obtained from these drawings without creative efforts.
FIG. 1 is a block diagram of a wireless communication system applicable to an embodiment of the present disclosure;
FIG. 2 is a first flowchart of a method for network access provided by an embodiment of the present disclosure;
FIG. 3 is a second flowchart of a method for network access provided by an embodiment of the present disclosure;
FIG. 4 is a first structural diagram of an apparatus for network access provided by an embodiment of the present disclosure;
FIG. 5 is a second structural diagram of an apparatus for network access provided by an embodiment of the present disclosure;
FIG. 6 is a first structural diagram of a terminal device provided by an embodiment of the present disclosure;
FIG. 7 is a first structural diagram of a base station provided by an embodiment of the present disclosure;
FIG. 8 is a second structural diagram of a terminal device provided by an embodiment of the present disclosure;
FIG. 9 is a second structural diagram of a base station provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. Based on the embodiments of the present disclosure, all other embodiments obtained by those of ordinary skill in the art without creative efforts fall within the protection scope of the present disclosure.

To make the embodiments of the present disclosure clearer, the following technical knowledge related to the embodiments of the present disclosure is first introduced:

### 1. 5G Voice Solutions

With the 4th Generation Mobile Communication Technology (4G) Long Term Evolution (LTE) entering the large-scale commercial stage, the future-oriented 5G has become a global research and development hotspot. There are various voice solutions related to different networking modes for 5G. Currently, the 3rd Generation Partnership Project (3GPP) defines two solutions for 5G New Radio (NR) networking, namely Standalone (SA) and Non-Standalone (NSA). For the 5G non-standalone networking mode, since the control plane is anchored on the 4G network, the Voice over LTE (VoLTE) solution is a natural choice for voice services. For the 5G standalone networking mode, 3GPP proposes two solutions: Voice Over New Radio (VoNR) and EPS Fallback. Among them, the VoNR solution refers to the IP Multimedia Subsystem (IMS) based voice service provided by the 5G access network and core network, while the EPS Fallback solution refers to the terminal falling back to 4G when initiating an IMS call on 5G, establishing a VoLTE voice service through the 4G access network and core network, and the fallback method may be handover.

### 2. Terminal 5G Call Establishment Process

It mainly includes the following procedures:
1. After the terminal is powered on and selects a 5G cell to camp on, it first performs the power-on registration process (i.e., Registration), then performs a Protocol Data Unit (PDU) session establishment process, i.e., establishing a Quality of Service (QoS) flow with level 5 to carry Session Initiation Protocol (SIP) signaling, and then initiates the IMS registration process. After the terminal completes IMS registration, it enters the idle state.
2. When the terminal actively initiates a call in the idle state, or after receiving a paging message as a called party, it first performs a Service Request procedure, re-establishes a QoS flow with level 5 to carry SIP signaling, and then sends an SIP Invite to the IMS.
3. After receiving this, the IMS notifies the core network to prepare for bearer establishment. Then the core network requests the base station to establish a QoS flow with level 1 to carry voice services. At this point, a distinction is made between VoNR and EPS Fallback solutions: if the base station selects the EPS Fallback solution, it will refuse to establish the QoS flow for the voice service and execute the EPS Fallback procedure, i.e., hand over or redirect the terminal to 4G, after which the terminal completes VoLTE call establishment on 4G; if the base station selects the VoNR solution, it will send a Radio Resource Control (RRC) Connection Reconfiguration message requesting the terminal to establish the QoS flow for the voice service, until the VoNR voice establishment procedure is completed.

### 3. Elastic Cell and Network Energy Saving Technology

Current discussions on elastic cell and network energy saving technology involve the concepts of anchor cell and non-anchor cell. Generally, an anchor cell is mainly used for receiving system messages, initiating Random Access Channel (RACH), etc., while a non-anchor cell is mainly used for data reception.

From the introduction of the above related technologies, it can be seen that due to the evolution of technology, the network will deploy different RAT technologies simultaneously, such as 4G and 5G. Similarly, in the future, 5G may be deployed simultaneously with other newer technologies, such as 6G (6th Generation). Therefore, there exists a mechanism similar to 5G voice fallback. Functions supported by different RATs may differ or have advantages and disadvantages, so it is necessary to allow the UE to access a cell of another RAT to complete a certain service through fallback or redirection. In the EPS fallback mechanism for voice, the Service Request is sent in Msg5, i.e., when the UE enters the connected state. It can be seen that both the network and the UE have performed necessary resource configuration and protocol stack establishment for the UE to enter the connected state, while redirection requires releasing the UE back to the idle state and then the UE reselects an appropriate cell based on the reselection priority information carried in the Release message.

It can be seen that the preliminary operations of the UE and the network are useless. How to avoid useless and power-consumption operations on the network side and the UE side and achieve correct access of the UE is a problem existing in the prior art and also a problem to be solved by the present disclosure.

In addition, similar to the above scenario, there is a similar scenario in elastic cell/network energy saving technology. The UE may be configured with one anchor cell and one non-anchor cell. Which non-anchor cell the network activates and on which non-anchor cell scheduling is performed, avoiding useless scheduling and additional network power consumption, and achieving correct access of the UE in this scenario, also need to be solved.

The method for network access provided by the embodiments of the present disclosure will be described in detail below with reference to the accompanying drawings through specific embodiments and application scenarios.

It is worth pointing out that the technology described in the embodiments of the present disclosure is not limited to Long Term Evolution (LTE)/LTE-Advanced (LTE-A) systems, and can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency Division Multiple Access (SC-FDMA), and other systems. The terms "system" and "network" in the embodiments of the present disclosure are often used interchangeably. The described technology can be used both for the systems and radio technologies mentioned above and for other systems and radio technologies. The following description describes a New Radio (NR) system for example purposes and uses NR terminology in most of the following description, but these techniques can also be applied to applications other than NR system applications, such as 6th Generation (6G) communication systems.

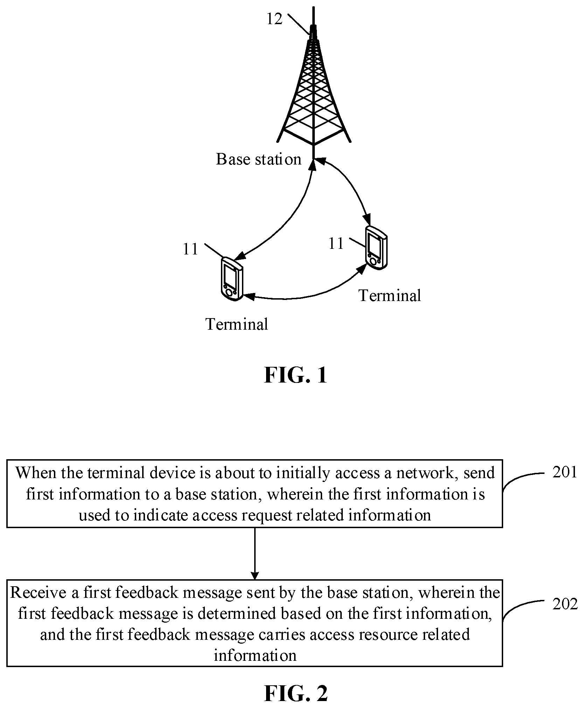

FIG. 1 shows a block diagram of a wireless communication system applicable to an embodiment of the present disclosure. The wireless communication system includes a terminal 11 and a base station 12. The terminal 11 may be a cell phone, a tablet personal computer, a laptop computer (or called notebook computer), a personal digital assistant (PDA), a palmtop computer, a netbook, an ultra-mobile personal computer (UMPC), a mobile internet device (MID), an augmented reality (AR)/virtual reality (VR) device, a robot, a wearable device, a vehicle user equipment (VUE), a pedestrian user equipment (PUE), a smart home (a home device with wireless communication function, such as a refrigerator, a television, a washing machine, or furniture, etc.), a game console, a personal computer (PC), an automatic teller machine or a self-service machine, a sensing service terminal, various sensors, a smart camera, and other terminal-side devices. Wearable devices include smart watches, smart bracelets, smart earphones, smart glasses, smart jewelry (smart bracelets, smart bangles, smart rings, smart necklaces, smart anklets, smart chains, etc.), smart wristbands, smart clothing, etc. It should be noted that the embodiments of the present disclosure do not limit the specific type of the terminal 11. The base station 12 may be referred to as a Node B, an Evolved Node B (eNB), an access point, a Base Transceiver Station (BTS), a radio base station, a radio transceiver, a Basic Service Set (BSS), an Extended Service Set (ESS), a Home B node, a Home Evolved B node, a Transmitting Receiving Point (TRP), a sensing signal sending device, a sensing information receiving device, or any other suitable term in the field. As long as the same technical effect is achieved, the base station is not limited to specific technical terms. It should be noted that in the embodiments of the present disclosure, only the base station in an NR system is taken as an example for introduction, and the specific type of the base station is not limited.

Referring to FIG. 2, FIG. 2 is a first flowchart of a method for network access provided by an embodiment of the present disclosure, performed by a terminal device. As shown in FIG. 2, the method comprises the following steps:
Step 201: When the terminal device is about to initially access a network, send first information to a base station, wherein the first information is used to indicate access request related information.

The terminal device in the embodiments of the present disclosure may refer to a UE, such as a cell phone, a portable mobile terminal, etc. For convenience of description, the embodiments of the present disclosure mainly take a UE as an example for illustration.

The base station in the embodiments of the present disclosure may refer to a 5G, 6G base station, etc., without specific limitation. Exemplarily, the embodiments of the present disclosure are applicable to a scenario where a UE initiates an access request to a 5G base station, and the 5G base station provides corresponding access resources for it, or provides 4G base station access resources for the UE to quickly access 4G, rather than rejecting the current access and then making the UE re-initiate the access procedure with the 4G base station.

In the embodiments of the present disclosure, in order to avoid useless preliminary operations for connection establishment caused by the base station selecting the EPS fallback mechanism when the UE accesses the base station network, the signaling interaction procedure between the UE and the network side during network access is improved. In the scenario where the UE initially accesses the network, first, the UE reports relevant indication information to the base station. Specifically, the UE sends first information to the base station, wherein the first information is used to indicate access request related information, to inform the base station of the cell, frequency point or service that the UE wants to access, so that the base station can determine whether it can support the UE's access request according to the indication information, thereby determining the specific access resource related information to be fed back to the UE.

Optionally, the access request related information comprises at least one of: a service requested by the terminal device, a frequency point that the terminal device desires to access, or a cell that the terminal device desires to access.

That is, in some embodiments, the access request related information sent by the UE to the base station may include at least one of the service requested by the UE, the frequency point desired by the UE, and the cell desired by the UE. That is, the UE may send relevant indication information to the base station it intends to access, to inform the base station of the service the UE wants to receive, the desired cell and/or frequency point, so that the base station can determine whether it can support the service requested by the UE, whether it is the cell desired by the UE, and/or whether the cell frequency point is the frequency point desired by the UE, thereby determining the specific information content to be fed back to the UE.

Step 202: Receive a first feedback message sent by the base station, wherein the first feedback message is determined based on the first information, and the first feedback message carries access resource related information.

The above first feedback message is determined by the base station according to the first information sent by the UE. Specifically, the base station can determine whether it can support the UE's access request according to the information, such as whether it supports the service requested by the UE, whether it is the cell desired by the UE, and/or whether the cell frequency point is the frequency point desired by the UE, thereby determining the access resource related information to be specifically carried in the feedback message to be sent to the UE.

Optionally, the access resource related information comprises at least one of: cell access resource information, first uplink scheduling resource information, or cell registration information.

In some specific embodiments, when the base station determines that it can support the service requested by the UE, that it is the cell desired by the UE, that the cell frequency point is the frequency point desired by the UE, or any such case, it can provide the current cell access resource for the UE. The current cell is also the serving cell corresponding to the base station. That is, in this case, the base station can feed back a message including the access resource information of its current cell to the UE, so that the UE can quickly access the current cell according to the access resource information provided by the base station.

When the base station determines that it cannot support the service requested by the UE, that it is not the cell desired by the UE, that the cell frequency point is not the frequency point desired by the UE, or any such case, it can provide other cell access resources that can support the service requested by the UE, or provide the cell access resource desired by the UE, or provide the cell access resource of the frequency point desired by the UE. Of course, it can also provide the current cell access resource or other accessible cell access resources. The current cell is also the serving cell corresponding to the base station. That is, in this case, the base station can feed back a message including access resource information of other relevant cells and/or the current cell to the UE, so that the UE can quickly access other cells and/or the current cell according to the access resource information provided by the base station.

It should be noted that before the base station sends the access resource information of other cells to the UE, the UE may also need additional uplink scheduling resources, such as an uplink grant (UL Grant), to receive the cell access resources fed back by the base station. In this case, the base station may first feed back a message including additional uplink scheduling resources to the UE, i.e., the first feedback message carries the first uplink scheduling resource information. Subsequently, the UE can listen for the next scheduling information from the base station based on the uplink scheduling resource, and obtain the access resource information of other cells fed back by the base station to the UE.

In one case, the base station can directly access the current cell for the UE, or interact with other cells to access other cells for the UE. That is, the base station can assist the UE in performing access registration to the current cell or other cells, and then send the registration information of the UE in the accessed cell to the UE. At this time, the first feedback message carries the cell registration information.

In this way, by reporting relevant indication information to the base station when initially accessing the network, the terminal device enables the base station to provide corresponding cell access resources, or assist in providing corresponding cell access resources, or provide access for the terminal device according to the indication information, thereby avoiding redirection to another cell for access after the RRC establishment of the terminal device is completed. That is, the useless preliminary operations for establishing a connection between the UE and the network side in the related art are avoided, saving signaling interaction resources.

Optionally, the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

In some embodiments, the access resource related information comprises cell access resource information. That is, after receiving the first information from the UE, the base station can provide cell access resource information for the UE, which may include access resource information of the first cell (i.e., the current cell) and/or access resource information of the second cell (i.e., other accessible cells). The specific cell access resource information carried may be determined by the base station according to the first information from the UE.

Further, the method further comprises:
performing network access based on the cell access resource information;
or, the access resource related information comprises first uplink scheduling resource information, and the method further comprises:
   sending a resource acquisition request to the base station based on the first uplink scheduling resource information;
   receiving cell access resource information comprising access resource information of a second cell sent by the base station, wherein the second cell is another cell other than the serving cell corresponding to the base station;
   performing network access based on the cell access resource information.

In some embodiments, after receiving the first feedback message, the UE can perform network access based on the access resource information of specific cells carried in the first feedback message, i.e., initiate registration to these cells to establish an RRC connection.

In other embodiments, the first feedback message carries first uplink scheduling resource information. The first uplink scheduling resource information may refer to uplink resource information for uplink scheduling, such as including an additional UL Grant for subsequent UL information transmission in RACH, e.g., for the UE to send measurement results or send other service requests, desired serving cell and/or frequency point information. That is, after receiving the first information from the UE, if the base station determines that the current cell cannot support the UE's service, or is not the cell and frequency point desired by the UE, it may first provide the UE with uplink scheduling resource information, so that the UE can continue relevant resource scheduling with the base station using the uplink scheduling resource information.

Specifically, the UE can send an uplink message, such as a resource acquisition request, to the base station using the uplink scheduling resource information provided by the base station. The base station then returns corresponding cell access resource information, such as feeding back access resource information of other accessible cells, to the UE in response to the UE's request. The UE can then perform network access based on the cell access resource information, i.e., initiate registration to other cells to establish an RRC connection.

Through this implementation, the UE can quickly access the cell network, avoiding excessive useless signaling interaction between the UE and the network side, and avoiding additional power consumption.

Optionally, the first information is carried in message (Message) 1, MSG3, or MSG5.

In some embodiments, when the UE sends the first information to the base station, it may specifically send it through messages such as MSG1, MSG3, or MSG5 in the random access procedure. That is, the first information may be carried in the MSG1, MSG3, or MSG5 message and sent to the base station. This saves signaling overhead without requiring additional signaling resources to send the indication information.

Optionally, the first information is indicated by a preconfigured preamble and/or a Random Access Channel (RACH) resource in MSG1;
or, the first information is indicated by a designated field in MSG3, wherein the designated field comprises at least one of a designated Logical Channel Identity (LCID), a designated bit or a designated bit sequence;
or, the first information is carried in terminal capability information and/or a Scheduling Request (SR) in MSG5.

In some embodiments, when the first information is sent via the MSG1 message, it may be implicitly indicated by a preconfigured preamble in MSG1. For example, different preamble symbols may be used to indicate different services, cell IDs, or cell frequency points. It may also be implicitly indicated by RACH resources, e.g., different RACH resources may be used to indicate different services, cell IDs, or cell frequency points. Alternatively, a combination of the preconfigured preamble and RACH resources in MSG1 may be used for implicit indication. In this way, implicit indication can be achieved through the MSG1 message, which also improves the security of information interaction between the UE and the network side to a certain extent.

In other embodiments, when the first information is sent via the MSG3 message, it may be indicated by a specific field in MSG3, such as a specific LCID, a specific bit, or a specific bit sequence. In this way, specific indication can be achieved through the MSG3 message, and the base station can obtain the UE indication information from the MSG3 message.

In still other embodiments, when the first information is sent via the MSG5 message, it may be carried in the terminal capability information and/or SR in MSG5 for indication, i.e., the terminal capability information and/or SR includes the first information. In this way, specific indication can be achieved through the MSG5 message, and the base station can obtain the UE indication information from the MSG5 message.

Optionally, before step 201, the method further comprises:
sending second information to the base station, wherein the second information is used to indicate the base station to allocate uplink scheduling resources for the terminal device, and/or to indicate that the terminal device supports access in multiple cells;
in a case where the second information is used to indicate the base station to allocate uplink scheduling resources for the terminal device, the method further comprises:
receiving second uplink scheduling resource information sent by the base station, wherein the second uplink scheduling resource information comprises at least one of scheduling information for MSG3 or uplink scheduling resources;
step 201 comprises:
   sending the first information to the base station based on the second uplink scheduling resource information.

In some embodiments, before sending the first information, the UE may first send second information to the base station to instruct the base station to allocate uplink scheduling resources for sending the first information. Exemplarily, the UE may first indicate to the base station that additional UL Grants are needed to send the first information; it may also indicate to the base station that the UE supports access in multiple cells (also called indicating dual registration), so that subsequently the base station can provide multiple cell access resources for the UE or access multiple cells for the UE.

If the second information instructs the base station to allocate uplink scheduling resources for the UE, the base station may send second uplink scheduling resource information to the UE based on the instruction. Specifically, the base station may provide scheduling information for MSG3 or MSG5, and may also additionally provide uplink scheduling resources, such as an additional UL Grant, for the UE to send the first information. That is, the UE can send the first information, such as desired service, cell and/or frequency point information, using the scheduling information for MSG3 and/or the additional UL Grant provided by the base station.

When sending the second information to the base station, the UE may specifically send it via messages such as MSG1 or MSG3 in the random access procedure. That is, the second information may be carried in the MSG1 or MSG3 message and sent to the base station. This saves signaling overhead without requiring additional signaling resources to send the indication information. After receiving the first information, the base station allocates uplink scheduling resources for the UE. The UE can then send the first information to the base station based on the allocated uplink scheduling resources, specifically via messages such as MSG3 or MSG5 in the random access procedure.

In this way, the UE can obtain uplink scheduling resources from the base station, and then send access-related indication information to the base station, thereby achieving cell network access.

Optionally, before step 201, the method further comprises:
receiving third information sent by the base station, wherein the third information comprises service information supported by different cells or frequency points, and/or the third information is used to indicate that the base station supports cooperative work;
step 201 comprises:
   sending the first information to the base station based on the third information.

In some embodiments, the UE sends the first information based on relevant indication information sent by the base station. Specifically, the base station may first send third information to the UE. The third information may indicate services supported by different cells or frequency points, so that the UE can determine the service, cell and/or frequency point information specifically indicated in the first information based on the information and its own service usage requirements. The third information may also indicate that the base station supports cooperative work, i.e., supports cooperation with other base stations, and can interact with other base stations when necessary to obtain access resource information of other cells to provide to the UE or directly access other cells for the UE.

In this way, the UE can determine which cell to send the first information to, or determine the desired cell and/or frequency point information specifically indicated in the first information, based on the third information and the actual requested service, and then send the specific first information to the corresponding base station. In this implementation, by initiating the corresponding access indication based on the relevant information provided by the base station, the access efficiency and success rate can be improved.

It should be noted that the UE may also send the first information to the base station when it has dual registration capability, e.g., supports registration in two or more cells.

Optionally, the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

In the embodiments of the present disclosure, the base station may perform scheduling based on the first information from the UE. The scheduling here may include the following situations:
1. The UE indicates service information, i.e., the first information indicates the service requested by the UE.

In this case, the base station may also have two different scheduling situations, specifically divided into the current cell supporting the service requested by the UE and the current cell not supporting the service. The specific scheduling methods are as follows:

If the current cell supports the service indicated by the UE, the base station may send a corresponding feedback message according to the existing mechanism, so that the UE completes the random access procedure and receives service data. The feedback message may be sent through, for example, RAR, MSG4, etc. The access resource related information carried in the feedback message may at least include the access resource information of the current cell. The feedback message may also carry scheduling information for scheduling the UE's MSG3, MSG5, so that the UE completes RACH.

If the current cell does not support the service indicated by the UE, the base station may carry one or more of the following information in a subsequent feedback message, such as RAR, MSG4, or another new downlink message: access resource information of other cells supporting the service indicated by the UE, resource information for the UE to send uplink scheduling information, registration information in other cells supporting the service indicated by the UE.

Through this implementation, when the UE indicates the requested service, the base station can feed back corresponding information for the UE according to whether it supports the service, so that the UE can quickly access the cell network, or assist the UE in accessing an available cell network.

Optionally, in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells;
cell registration information.

That is, in some embodiments, when the current cell does not support the service indicated by the UE, the base station may carry one or more of the following information in the feedback message:
1. Scheduling information for the UE's uplink message, such as a UL Grant, scheduling information for scheduling the UE's MSG3, MSG5, so that the UE uses the scheduling information to complete RACH;
2. Other cells and/or frequency points that can support/allow access for the service desired by the UE;
3. An additional UL Grant for subsequent UL information transmission in RACH other than the uplink message (MSG3 or MSG5), such as transmission of measurement results, or for the UE to send other services and/or desired serving cell and/or frequency point information;
4. An indication bit for instructing the UE to continue receiving allocation of additional UL Grants. Upon receiving this indication, the UE will continue listening, e.g., to receive the additional UL Grant described in 3);
5. Dual registration indication information (i.e., access indication information), used to indicate whether the UE completes RRC establishment in the current cell and completes RRC establishment in other cells;
6. A dedicated UE identifier (denoted as UE-specific cell) or neighbor cell access resource, used for access in the cell indicated by the base station;
7. Cell registration information, e.g., the current cell may trigger the UE's registration in another RAT, i.e., register for the UE in other cells, and may send the corresponding registration information to the UE, specifically through the current feedback message or through an additional downlink message.

The above information enables better indication for the UE to complete cell network access, improving access efficiency and success rate.

It should be noted that, in some embodiments, the current cell may interact with other cells (e.g., those capable of cooperative work and/or indicated to the UE for access), such as indicating UE information to other cells, and/or obtaining identifiers and/or access resources available for the UE in other cells. This process may occur during Xn interface establishment and/or during UE random access.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

In the embodiments of the present disclosure, the base station performing scheduling based on the first information from the UE may also include the following second situation:

2. The UE indication information is the desired frequency point and/or cell, i.e., the first information indicates the frequency point and/or cell that the UE desires to access.

In this case, the base station may carry one or more of the following information in the feedback message:
1. Scheduling information for the UE's uplink message, such as a UL Grant, scheduling information for scheduling the UE's MSG3, MSG5;
2. An indication of whether the cell desired by the UE is activated, and possibly, may provide its Synchronization Signal Block (SSB) related information, and/or access resources, etc.;
3. Dual registration indication information (i.e., access indication information), used to indicate whether the UE completes RRC establishment in the current cell and completes RRC establishment in other cells;
4. Accessible cell and/or frequency point information; this information may differ from the desired cell/frequency point information indicated by the UE;
5. Cell registration information, e.g., the current cell may trigger the UE's registration in another RAT, i.e., register for the UE in other cells, and may send the corresponding registration information to the UE, specifically through the current feedback message or through an additional downlink message.

The above information enables better indication for the UE to complete cell network access, improving access efficiency and success rate.

It should be noted that, in the embodiments of the present disclosure, the base station performing scheduling based on the first information from the UE may also include the following third situation:

3. The UE indicates that an additional UL Grant is needed for sending desired service and/or cell/frequency point information.

In this case, similar to the above, the base station may provide scheduling for MSG3, or additionally provide uplink scheduling for the UE to send desired service and/or cell/frequency point information.

Optionally, the performing network access based on the cell access resource information comprises at least one of:
in a case where the cell access resource information only comprises the access resource information of the first cell, accessing the first cell based on the access resource information of the first cell;
in a case where the cell access resource information only comprises the access resource information of the second cell, terminating access to the first cell, and accessing the second cell based on the access resource information of the second cell;
in a case where the cell access resource information comprises the access resource information of the first cell and the access resource information of the second cell, accessing the first cell and the second cell respectively based on the access resource information of the first cell and the access resource information of the second cell.

That is, in some embodiments, according to different feedback information from the base station, the UE performs different access behaviors. Specifically, based on the network feedback information, the access behavior of the UE may be one or more of the following behaviors:
1. When the base station feedback message indicates access in the current cell, and/or provides access resources of the current cell, the UE may continue to complete RRC establishment in the current cell, and then perform service reception;
2. When the base station feedback message indicates access in another cell, and/or provides access resources of another cell, the UE may terminate the RACH procedure in the current cell based on the network indication information, reselect to the other cell indicated by the network, and perform access and service data reception;
3. When the base station feedback message carries uplink scheduling resource information, the UE may terminate the RACH procedure in the current cell, listen for the second scheduling information, obtain other cell information, and reselect to the other cell indicated by the network to perform access and service data reception;
4. When the base station feedback message indicates access in both the current cell and other cells, and/or provides access resources of the current cell and other cells, the UE may continue RRC establishment in the current cell, and perform RRC establishment in the other cells indicated by the network (the network indication information may be directly carried in MSG2 or MSG4 or other messages), retain two RRCs, i.e., access two cells, and perform service data reception in the cell indicated by the network;
5. When the base station feedback message carries uplink scheduling resource information, the UE may also perform measurements according to the measurement target configured by the base station, and send measurement results, and/or current access cell, frequency point information.

In this way, the UE can perform corresponding access behaviors according to different feedback/scheduling information from the network, and can complete network access through a relatively small number of signaling interaction procedures.

It should be noted that in the case where the UE simultaneously accesses the current cell and other cells, it is convenient for the UE to possibly receive other services later without needing to access the current cell again, and also avoids useless preliminary interaction procedures. In the case where the UE only connects to one cell, the UE behavior is simpler, and the network side does not need to perform resource configuration and scheduling with the UE.

Optionally, the cell access resource information only comprises the access resource information of the second cell;
the performing network access based on the cell access resource information comprises:
initiating an access request to the second cell, wherein the access request carries fourth information, and the fourth information is used to indicate that the access request is initiated based on an indication from a cell other than the second cell.

That is, in some embodiments, if the UE will access another cell for service data reception, it may carry a relevant indication during the access procedure to indicate whether it is initiated based on an instruction from a cell other than the current access cell. For example, when initiating an access request to the second cell, it may indicate in the request that it is based on an instruction from the first cell. In this way, the cell requested for access can prioritize responding to the UE's access request, thereby improving the access success probability.

The embodiments of the present disclosure, by indicating the desired service, cell, and frequency point information to the network when initially accessing the network, enable the base station to provide corresponding access resources or assist in providing access resources of other cells based on the UE's indication, without requiring the UE to fall back to another cell to re-initiate the access procedure. Compared with existing redirection or cell reselection methods, this can save interaction signaling well. That is, the embodiments of the present disclosure can avoid redirection to another cell for access and then receiving certain service data after the UE's RRC establishment is completed, avoiding additional power consumption and signaling interaction between the UE and the network side.

In the method for network access of the embodiments of the present disclosure, when the terminal device is about to initially access a network, it sends first information to a base station, the first information being used to indicate access request related information; and receives a first feedback message sent by the base station, wherein the first feedback message is determined based on the first information, and the first feedback message carries access resource related information. In this way, by reporting relevant indication information to the base station when initially accessing the network, the terminal device enables the base station to provide corresponding access resource related information according to the indication information, thereby avoiding redirection to another cell for access after the RRC establishment of the terminal device is completed. That is, the useless preliminary operations for establishing a connection between the UE and the network side in the related art are avoided, saving signaling interaction resources.

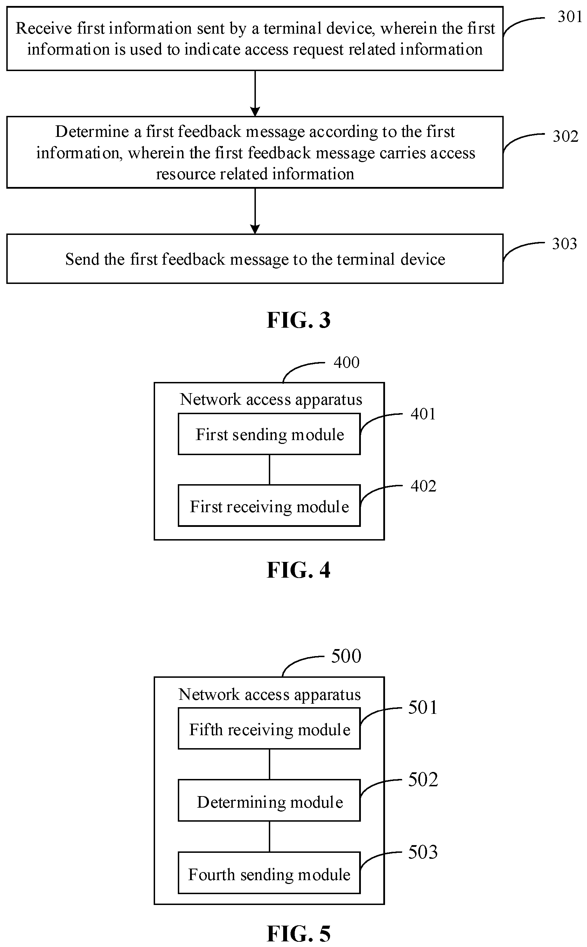

Referring to FIG. 3, FIG. 3 is a second flowchart of a method for network access provided by an embodiment of the present disclosure, performed by a base station. As shown in FIG. 3, the method comprises the following steps:
Step 301: Receive first information sent by a terminal device, wherein the first information is used to indicate access request related information.
Step 302: Determine a first feedback message according to the first information, wherein the first feedback message carries access resource related information.
Step 303: Send the first feedback message to the terminal device.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the cell access resource information comprises at least one of access resource information of a first cell or access resource information of a second cell, wherein the first cell is a serving cell corresponding to the base station, and the second cell is another cell other than the first cell.

Optionally, step 302 comprises:
determining the cell access resource information or the first uplink scheduling resource information according to the first information;
step 303 comprises:
   sending the first feedback message carrying the cell access resource information or the first uplink scheduling resource information to the terminal device;
   or, step 302 comprises:
      determining the cell access resource information according to the first information;
      step 303 comprises:
         initiating access registration of the terminal device to the cell corresponding to the cell access resource information, and sending the first feedback message carrying cell registration information to the terminal device, wherein the cell registration information is registration information of the cell corresponding to the cell access resource information.

Optionally, in a case where the first feedback message carries the first uplink scheduling resource information, after step 303, the method further comprises:
receiving a resource acquisition request sent by the terminal device based on the first uplink scheduling resource information;
in response to the resource acquisition request, sending cell access resource information comprising access resource information of the second cell to the terminal device.

Optionally, the first information is carried in MSG1, MSG3, or MSG5.

Optionally, the first information is indicated by a preconfigured preamble and RACH resource in MSG1;
or, the first information is indicated by a designated field in MSG3, wherein the designated field comprises at least one of a designated Logical Channel Identity (LCID), a designated bit or a designated bit sequence;
or, the first information is carried in terminal capabilities and/or a Scheduling Request (SR) in MSG5.

Optionally, before step 301, the method further comprises:
receiving second information sent by the terminal device, wherein the second information is used to indicate the base station to allocate uplink scheduling resources for the terminal device, and/or indicate that the terminal device supports access in multiple cells.

Optionally, in a case where the second information is used to indicate the base station to allocate uplink scheduling resources for the terminal device, the method further comprises:
sending second uplink scheduling resource information to the terminal device based on the second information, wherein the second uplink scheduling resource information comprises at least one of scheduling information for MSG3 or uplink scheduling resources;
step 301 comprises:
   receiving the first information sent by the terminal device based on the second uplink scheduling resource information.

Optionally, before step 301, the method further comprises:
sending third information to the terminal device, wherein the third information comprises service information supported by different cells or frequency points, and/or the third information is used to indicate that the base station supports cooperative work.

Optionally, the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
the first uplink scheduling resource information comprises at least one of:
   scheduling information for an uplink message;
   uplink scheduling resources;
   a first indication bit, used to indicate the terminal device to continue receiving uplink scheduling resources;
   access indication information, used to indicate whether the terminal device performs access in the first cell and other cells;
   cell registration information.

Optionally, the first information comprises a frequency point that the terminal device desires to access and/or a cell that the terminal device desires to access;
the first feedback message carries at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

It should be noted that, as an implementation on the base station side corresponding to the embodiment shown in FIG. 2, the specific implementation of this embodiment can refer to the relevant introduction in the foregoing embodiments, and the same technical effect can be achieved. To avoid repetition, details are not repeated here.

In the method for network access of the embodiments of the present disclosure, the base station receives first information sent by a terminal device, wherein the first information is used to indicate access request related information; determines a first feedback message according to the first information, wherein the first feedback message carries access resource related information; and sends the first feedback message to the terminal device. In this way, by reporting relevant indication information to the base station when initially accessing the network, the terminal device enables the base station to provide corresponding access resource related information according to the indication information, thereby avoiding redirection to another cell for access after the RRC establishment of the terminal device is completed. That is, the useless preliminary operations for establishing a connection between the UE and the network side in the related art are avoided, saving signaling interaction resources.

The embodiments of the present disclosure further provide an apparatus for network access, provided in a terminal device. Referring to FIG. 4, FIG. 4 is a first structural diagram of an apparatus for network access provided by an embodiment of the present disclosure. Since the principle of the network access apparatus for solving the problem is similar to that of the method for network access in the embodiments of the present disclosure, the implementation of the network access apparatus can refer to the implementation of the method, and repeated descriptions are omitted.

As shown in FIG. 4, the network access apparatus 400 comprises:
a first sending module 401, configured to, when the terminal device is about to initially access a network, send first information to a base station, wherein the first information is used to indicate access request related information;
a first receiving module 402, configured to receive a first feedback message sent by the base station, wherein the first feedback message is determined based on the first information, and the first feedback message carries access resource related information.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

Optionally, the network access apparatus 400 further comprises:
an access module, configured to perform network access based on the cell access resource information;
or, the access resource related information comprises first uplink scheduling resource information, and the network access apparatus 400 further comprises:
a second sending module, configured to send a resource acquisition request to the base station based on the first uplink scheduling resource information;
a second receiving module, configured to receive cell access resource information comprising access resource information of a second cell sent by the base station, wherein the second cell is another cell other than the serving cell corresponding to the base station;
an access module, configured to perform network access based on the cell access resource information.

Optionally, the first information is carried in message MSG1, MSG3, or MSG5.

Optionally, the first information is indicated by a preconfigured preamble and/or a Random Access Channel (RACH) resource in MSG1;
or, the first information is indicated by a designated field in MSG3, wherein the designated field comprises at least one of a designated Logical Channel Identity (LCID), a designated bit or a designated bit sequence;
or, the first information is carried in terminal capability information and/or a Scheduling Request (SR) in MSG5.

Optionally, the network access apparatus 400 further comprises:
a third sending module, configured to send second information to the base station, wherein the second information is used to indicate the base station to allocate uplink scheduling resources for the terminal device, and/or to indicate that the terminal device supports access in multiple cells;
in a case where the second information is used to indicate the base station to allocate uplink scheduling resources for the terminal device, the network access apparatus 400 further comprises:
   a third receiving module, configured to receive second uplink scheduling resource information sent by the base station, wherein the second uplink scheduling resource information comprises at least one of scheduling information for MSG3 or uplink scheduling resources;
   the first sending module 401 is configured to send the first information to the base station based on the second uplink scheduling resource information.

Optionally, the network access apparatus 400 further comprises:
a fourth receiving module, configured to receive third information sent by the base station, wherein the third information comprises service information supported by different cells or frequency points, and/or the third information is used to indicate that the base station supports cooperative work;
the first sending module 401 is configured to send the first information to the base station based on the third information.

Optionally, the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells;
cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

Optionally, the access module comprises at least one of:
a first access unit, configured to, in a case where the cell access resource information only comprises the access resource information of the first cell, access the first cell based on the access resource information of the first cell;
a second access unit, configured to, in a case where the cell access resource information only comprises the access resource information of the second cell, terminate access to the first cell, and access the second cell based on the access resource information of the second cell;
a third access unit, configured to, in a case where the cell access resource information comprises the access resource information of the first cell and the access resource information of the second cell, access the first cell and the second cell respectively based on the access resource information of the first cell and the access resource information of the second cell.

Optionally, the cell access resource information only comprises the access resource information of the second cell;
the access module is configured to initiate an access request to the second cell, wherein the access request carries fourth information, and the fourth information is used to indicate that the access request is initiated based on an indication from a cell other than the second cell.

The network access apparatus 400 provided in the embodiments of the present disclosure can execute the method embodiment shown in FIG. 2, and its implementation principle and technical effect are similar, so details are not repeated here.

In the network access apparatus 400 of the embodiments of the present disclosure, when the terminal device is about to initially access a network, it sends first information to a base station, the first information being used to indicate access request related information; and receives a first feedback message sent by the base station, wherein the first feedback message is determined based on the first information, and the first feedback message carries access resource related information. In this way, by reporting relevant indication information to the base station when initially accessing the network, the terminal device enables the base station to provide corresponding access resource related information according to the indication information, thereby avoiding redirection to another cell for access after the RRC establishment of the terminal device is completed. That is, the useless preliminary operations for establishing a connection between the UE and the network side in the related art are avoided, saving signaling interaction resources.

The embodiments of the present disclosure further provide an apparatus for network access, provided in a base station. Referring to FIG. 5, FIG. 5 is a second structural diagram of an apparatus for network access provided by an embodiment of the present disclosure. Since the principle of the network access apparatus for solving the problem is similar to that of the method for network access in the embodiments of the present disclosure, the implementation of the network access apparatus can refer to the implementation of the method, and repeated descriptions are omitted.

As shown in FIG. 5, the network access apparatus 500 comprises:
a fifth receiving module 501, configured to receive first information sent by a terminal device, wherein the first information is used to indicate access request related information;
a determining module 502, configured to determine a first feedback message according to the first information, wherein the first feedback message carries access resource related information;
a fourth sending module 503, configured to send the first feedback message to the terminal device.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the cell access resource information comprises at least one of access resource information of a first cell or access resource information of a second cell, wherein the first cell is a serving cell corresponding to the base station, and the second cell is another cell other than the first cell.

Optionally, the determining module 502 is configured to determine the cell access resource information or the first uplink scheduling resource information according to the first information;
the fourth sending module 503 is configured to send the first feedback message carrying the cell access resource information or the first uplink scheduling resource information to the terminal device;
or, the determining module 502 is configured to determine the cell access resource information according to the first information;
the fourth sending module 503 is configured to initiate access registration of the terminal device to the cell corresponding to the cell access resource information, and send the first feedback message carrying cell registration information to the terminal device, wherein the cell registration information is registration information of the cell corresponding to the cell access resource information.

Optionally, in a case where the first feedback message carries the first uplink scheduling resource information, the network access apparatus 500 further comprises:
a sixth receiving module, configured to receive a resource acquisition request sent by the terminal device based on the first uplink scheduling resource information;
a fifth sending module, configured to, in response to the resource acquisition request, send cell access resource information comprising access resource information of the second cell to the terminal device.

Optionally, the first information is carried in MSG1, MSG3, or MSG5.

Optionally, the first information is indicated by a preconfigured preamble and RACH resource in MSG1;
or, the first information is indicated by a designated field in MSG3, wherein the designated field comprises at least one of a designated Logical Channel Identity (LCID), a designated bit or a designated bit sequence;
or, the first information is carried in terminal capabilities and/or a Scheduling Request (SR) in MSG5.

Optionally, the network access apparatus 500 further comprises:
a seventh receiving module, configured to receive second information sent by the terminal device, wherein the second information is used to indicate the base station to allocate uplink scheduling resources for the terminal device, and/or indicate that the terminal device supports access in multiple cells.

Optionally, in a case where the second information is used to indicate the base station to allocate uplink scheduling resources for the terminal device, the network access apparatus 500 further comprises:
a sixth sending module, configured to send second uplink scheduling resource information to the terminal device based on the second information, wherein the second uplink scheduling resource information comprises at least one of scheduling information for MSG3 or uplink scheduling resources;
the fifth receiving module 501 is configured to receive the first information sent by the terminal device based on the second uplink scheduling resource information.

Optionally, the network access apparatus 500 further comprises:
a seventh sending module, configured to send third information to the terminal device, wherein the third information comprises service information supported by different cells or frequency points, and/or the third information is used to indicate that the base station supports cooperative work.

Optionally, the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
the first uplink scheduling resource information comprises at least one of:
   scheduling information for an uplink message;
   uplink scheduling resources;
   a first indication bit, used to indicate the terminal device to continue receiving uplink scheduling resources;
   access indication information, used to indicate whether the terminal device performs access in the first cell and other cells;
   cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

The network access apparatus 500 provided in the embodiments of the present disclosure can execute the method embodiment shown in FIG. 3, and its implementation principle and technical effect are similar, so details are not repeated here.

In the network access apparatus 500 of the embodiments of the present disclosure, the base station receives first information sent by a terminal device, wherein the first information is used to indicate access request related information; determines a first feedback message according to the first information, wherein the first feedback message carries access resource related information; and sends the first feedback message to the terminal device. In this way, by reporting relevant indication information to the base station when initially accessing the network, the terminal device enables the base station to provide corresponding access resource related information according to the indication information, thereby avoiding redirection to another cell for access after the RRC establishment of the terminal device is completed. That is, the useless preliminary operations for establishing a connection between the UE and the network side in the related art are avoided, saving signaling interaction resources.

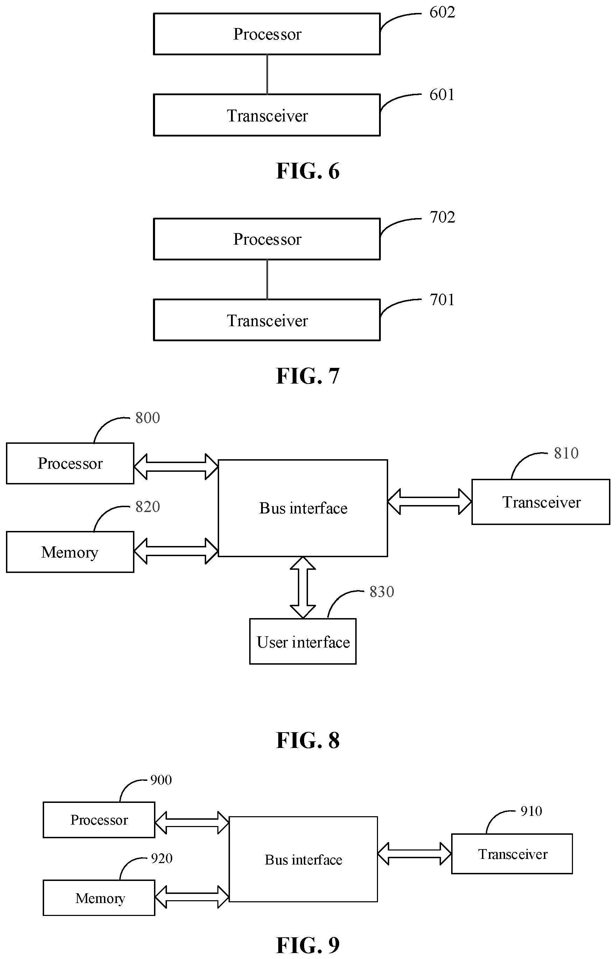

Referring to FIG. 6, an embodiment of the present disclosure further provides a terminal device, comprising a transceiver 601 and a processor 602, wherein
the transceiver 601 is configured to, when the terminal device is about to initially access a network, send first information to a base station, wherein the first information is used to indicate access request related information;
the transceiver 601 is further configured to receive a first feedback message sent by the base station, wherein the first feedback message is determined based on the first information, and the first feedback message carries access resource related information.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

Optionally, the processor 602 is configured to perform network access based on the cell access resource information;
or,
the access resource related information comprises first uplink scheduling resource information, the transceiver 601 is further configured to send a resource acquisition request to the base station based on the first uplink scheduling resource information;
the transceiver 601 is further configured to receive cell access resource information comprising access resource information of a second cell sent by the base station, wherein the second cell is another cell other than the serving cell corresponding to the base station;
the processor 602 is further configured to perform network access based on the cell access resource information.

Optionally, the first information is carried in message MSG1, MSG3, or MSG5.

Optionally, the first information is indicated by a preconfigured preamble and/or a Random Access Channel (RACH) resource in MSG1;
or, the first information is indicated by a designated field in MSG3, wherein the designated field comprises at least one of a designated Logical Channel Identity (LCID), a designated bit or a designated bit sequence;
or, the first information is carried in terminal capability information and/or a Scheduling Request (SR) in MSG5.

Optionally, the transceiver 601 is further configured to send second information to the base station, wherein the second information is used to indicate the base station to allocate uplink scheduling resources for the terminal device, and/or to indicate that the terminal device supports access in multiple cells;

in a case where the second information is used to indicate the base station to allocate uplink scheduling resources for the terminal device, the transceiver 601 is further configured to receive second uplink scheduling resource information sent by the base station, wherein the second uplink scheduling resource information comprises at least one of scheduling information for MSG3 or uplink scheduling resources;
the transceiver 601 is further configured to send the first information to the base station based on the second uplink scheduling resource information.

Optionally, the transceiver 601 is further configured to receive third information sent by the base station, wherein the third information comprises service information supported by different cells or frequency points, and/or the third information is used to indicate that the base station supports cooperative work;
the transceiver 601 is further configured to send the first information to the base station based on the third information.

Optionally, the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells;
cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

Optionally, the processor 602 is further configured to perform at least one of:
in a case where the cell access resource information only comprises the access resource information of the first cell, accessing the first cell based on the access resource information of the first cell;
in a case where the cell access resource information only comprises the access resource information of the second cell, terminating access to the first cell, and accessing the second cell based on the access resource information of the second cell;
in a case where the cell access resource information comprises the access resource information of the first cell and the access resource information of the second cell, accessing the first cell and the second cell respectively based on the access resource information of the first cell and the access resource information of the second cell.

Optionally, the cell access resource information only comprises the access resource information of the second cell;
the transceiver 601 is further configured to initiate an access request to the second cell, wherein the access request carries fourth information, and the fourth information is used to indicate that the access request is initiated based on an indication from a cell other than the second cell.

The terminal device provided in the embodiments of the present disclosure can execute the method embodiment shown in FIG. 3, and its implementation principle and technical effect are similar, so details are not repeated here.

Referring to FIG. 7, an embodiment of the present disclosure further provides a base station, comprising a transceiver 701 and a processor 702, wherein
the transceiver 701 is configured to receive first information sent by a terminal device, wherein the first information is used to indicate access request related information;
the processor 702 is configured to determine a first feedback message according to the first information, wherein the first feedback message carries access resource related information;
the transceiver 701 is further configured to send the first feedback message to the terminal device.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the cell access resource information comprises at least one of access resource information of a first cell or access resource information of a second cell, wherein the first cell is a serving cell corresponding to the base station, and the second cell is another cell other than the first cell.

Optionally, the processor 702 is further configured to determine the cell access resource information or the first uplink scheduling resource information according to the first information;
the transceiver 701 is further configured to send the first feedback message carrying the cell access resource information or the first uplink scheduling resource information to the terminal device;
or, the processor 702 is further configured to determine the cell access resource information according to the first information;
the transceiver 701 is further configured to initiate access registration of the terminal device to the cell corresponding to the cell access resource information, and send the first feedback message carrying cell registration information to the terminal device, wherein the cell registration information is registration information of the cell corresponding to the cell access resource information.

Optionally, in a case where the first feedback message carries the first uplink scheduling resource information, the transceiver 701 is further configured to receive a resource acquisition request sent by the terminal device based on the first uplink scheduling resource information;
the transceiver 701 is further configured to, in response to the resource acquisition request, send cell access resource information comprising access resource information of the second cell to the terminal device.

Optionally, the first information is carried in MSG1, MSG3, or MSG5.

Optionally, the first information is indicated by a preconfigured preamble and RACH resource in MSG1;
or, the first information is indicated by a designated field in MSG3, wherein the designated field comprises at least one of a designated Logical Channel Identity (LCID), a designated bit or a designated bit sequence;
or, the first information is carried in terminal capabilities and/or a Scheduling Request (SR) in MSG5.

Optionally, the transceiver 701 is further configured to receive second information sent by the terminal device, wherein the second information is used to indicate the base station to allocate uplink scheduling resources for the terminal device, and/or indicate that the terminal device supports access in multiple cells.

Optionally, in a case where the second information is used to indicate the base station to allocate uplink scheduling resources for the terminal device, the transceiver 701 is further configured to send second uplink scheduling resource information to the terminal device based on the second information, wherein the second uplink scheduling resource information comprises at least one of scheduling information for MSG3 or uplink scheduling resources;
the transceiver 701 is further configured to receive the first information sent by the terminal device based on the second uplink scheduling resource information.

Optionally, the transceiver 701 is further configured to send third information to the terminal device, wherein the third information comprises service information supported by different cells or frequency points, and/or the third information is used to indicate that the base station supports cooperative work.

Optionally, the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
the first uplink scheduling resource information comprises at least one of:
   scheduling information for an uplink message;
   uplink scheduling resources;
   a first indication bit, used to indicate the terminal device to continue receiving uplink scheduling resources;
   access indication information, used to indicate whether the terminal device performs access in the first cell and other cells;
   cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

The base station provided in the embodiments of the present disclosure can execute the method embodiment shown in FIG. 4, and its implementation principle and technical effect are similar, so details are not repeated here.

An embodiment of the present disclosure further provides a terminal device. Since the principle of the terminal device for solving the problem is similar to that of the method for network access in the embodiments of the present disclosure, the implementation of the terminal device can refer to the implementation of the method, and repeated descriptions are omitted. As shown in FIG. 8, the terminal device of the embodiment of the present disclosure comprises:
a processor 800, configured to read a program from a memory 820, and execute the following processes:
when the terminal device is about to initially access a network, sending, through a transceiver 810, first information to a base station, wherein the first information is used to indicate access request related information;
receiving, through the transceiver 810, a first feedback message sent by the base station, wherein the first feedback message is determined based on the first information, and the first feedback message carries access resource related information.

The transceiver 810 is configured to receive and send data under the control of the processor 800.

In FIG. 8, the bus architecture may include any number of interconnected buses and bridges, specifically linking together various circuits represented by one or more processors represented by the processor 800 and a memory represented by the memory 820. The bus architecture may also link together various other circuits such as peripherals, voltage regulators, and power management circuits, which are well known in the art and therefore will not be further described herein. The bus interface provides an interface. The transceiver 810 may be a plurality of elements, i.e., including a transmitter and a transceiver, providing a unit for communicating with various other devices over a transmission medium. For different user devices, a user interface 830 may also be an interface capable of connecting externally or internally to needed devices. The connected devices include, but are not limited to, a keypad, a display, a speaker, a microphone, a joystick, etc. The processor 800 is responsible for managing the bus architecture and general processing, and the memory 820 may store data used by the processor 800 when performing operations.

Optionally, the access request related information comprises at least one of: a service requested by the terminal device, a frequency point that the terminal device desires to access, or a cell that the terminal device desires to access.

Optionally, the access resource related information comprises at least one of: cell access resource information, first uplink scheduling resource information, or cell registration information.

Optionally, the processor 800 is further configured to read the program from the memory 820 and execute the following step:

the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

Optionally, the processor 800 is further configured to read the program from the memory 820 and execute the following step:
performing network access based on the cell access resource information;
or, the access resource related information comprises first uplink scheduling resource information, and the processor 800 is further configured to read the program from the memory 820 and execute the following steps:
sending, through the transceiver 810, a resource acquisition request to the base station based on the first uplink scheduling resource information;
receiving, through the transceiver 810, cell access resource information comprising access resource information of a second cell sent by the base station, wherein the second cell is another cell other than the serving cell corresponding to the base station;
performing network access based on the cell access resource information.

Optionally, the first information is carried in message MSG1, MSG3, or MSG5.

Optionally, the first information is indicated by a preconfigured preamble and/or a Random Access Channel (RACH) resource in MSG1;
or, the first information is indicated by a designated field in MSG3, wherein the designated field comprises at least one of a designated Logical Channel Identity (LCID), a designated bit or a designated bit sequence;
or, the first information is carried in terminal capability information and/or a Scheduling Request (SR) in MSG5.

Optionally, the processor 800 is further configured to read the program from the memory 820 and execute the following steps:
sending, through the transceiver 810, second information to the base station, wherein the second information is used to indicate the base station to allocate uplink scheduling resources for the terminal device, and/or to indicate that the terminal device supports access in multiple cells;
in a case where the second information is used to indicate the base station to allocate uplink scheduling resources for the terminal device, the processor 800 is further configured to read the program from the memory 820 and execute the following steps:
   receiving, through the transceiver 810, second uplink scheduling resource information sent by the base station, wherein the second uplink scheduling resource information comprises at least one of scheduling information for MSG3 or uplink scheduling resources;
   sending, through the transceiver 810, the first information to the base station based on the second uplink scheduling resource information.

Optionally, the processor 800 is further configured to read the program from the memory 820 and execute the following steps:
receiving, through the transceiver 810, third information sent by the base station, wherein the third information comprises service information supported by different cells or frequency points, and/or the third information is used to indicate that the base station supports cooperative work;
sending, through the transceiver 810, the first information to the base station based on the third information.

Optionally, the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells;
cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

Optionally, the processor 800 is further configured to read the program from the memory 820 and execute at least one of the following steps:
in a case where the cell access resource information only comprises the access resource information of the first cell, accessing the first cell based on the access resource information of the first cell;
in a case where the cell access resource information only comprises the access resource information of the second cell, terminating access to the first cell, and accessing the second cell based on the access resource information of the second cell;
in a case where the cell access resource information comprises the access resource information of the first cell and the access resource information of the second cell, accessing the first cell and the second cell respectively based on the access resource information of the first cell and the access resource information of the second cell.

Optionally, the cell access resource information only comprises the access resource information of the second cell;
the processor 800 is further configured to read the program from the memory 820 and execute the following step:
initiating, through the transceiver 810, an access request to the second cell, wherein the access request carries fourth information, and the fourth information is used to indicate that the access request is initiated based on an indication from a cell other than the second cell.

The terminal device provided in the embodiments of the present disclosure can execute the method embodiment shown in FIG. 2, and its implementation principle and technical effect are similar, so details are not repeated here.

An embodiment of the present disclosure further provides a base station. Since the principle of the base station for solving the problem is similar to that of the method for network access in the embodiments of the present disclosure, the implementation of the base station can refer to the implementation of the method, and repeated descriptions are omitted. As shown in FIG. 9, the base station of the embodiment of the present disclosure comprises:
a processor 900, configured to read a program from a memory 920, and execute the following processes:
receiving, through a transceiver 910, first information sent by a terminal device, wherein the first information is used to indicate access request related information;
determining a first feedback message according to the first information, wherein the first feedback message carries access resource related information;
sending, through the transceiver 910, the first feedback message to the terminal device.

The transceiver 910 is configured to receive and send data under the control of the processor 900.

In FIG. 9, the bus architecture may include any number of interconnected buses and bridges, specifically linking together various circuits represented by one or more processors represented by the processor 900 and a memory represented by the memory 920. The bus architecture may also link together various other circuits such as peripherals, voltage regulators, and power management circuits, which are well known in the art and therefore will not be further described herein. The bus interface provides an interface. The transceiver 910 may be a plurality of elements, i.e., including a transmitter and a receiver, providing a unit for communicating with various other devices over a transmission medium. The processor 900 is responsible for managing the bus architecture and general processing, and the memory 920 may store data used by the processor 900 when performing operations.

Optionally, the cell access resource information comprises at least one of access resource information of a first cell or access resource information of a second cell, wherein the first cell is a serving cell corresponding to the base station, and the second cell is another cell other than the first cell.

Optionally, the processor 900 is further configured to read the program from the memory 920 and execute the following steps:
determining the cell access resource information or the first uplink scheduling resource information according to the first information;
sending, through the transceiver 910, the first feedback message carrying the cell access resource information or the first uplink scheduling resource information to the terminal device;
or, the processor 900 is further configured to read the program from the memory 920 and execute the following steps:
   determining the cell access resource information according to the first information;
   initiating access registration of the terminal device to the cell corresponding to the cell access resource information, and sending, through the transceiver 910, the first feedback message carrying cell registration information to the terminal device, wherein the cell registration information is registration information of the cell corresponding to the cell access resource information.

Optionally, in a case where the first feedback message carries the first uplink scheduling resource information, the processor 900 is further configured to read the program from the memory 920 and execute the following steps:
receiving, through the transceiver 910, a resource acquisition request sent by the terminal device based on the first uplink scheduling resource information;
in response to the resource acquisition request, sending, through the transceiver 910, cell access resource information comprising access resource information of the second cell to the terminal device.

Optionally, the first information is carried in MSG1, MSG3, or MSG5.

Optionally, the first information is indicated by a preconfigured preamble and RACH resource in MSG1;
or, the first information is indicated by a designated field in MSG3, wherein the designated field comprises at least one of a designated Logical Channel Identity (LCID), a designated bit or a designated bit sequence;
or, the first information is carried in terminal capabilities and/or a Scheduling Request (SR) in MSG5.

Optionally, the processor 900 is further configured to read the program from the memory 920 and execute the following step:
receiving, through the transceiver 910, second information sent by the terminal device, wherein the second information is used to indicate the base station to allocate uplink scheduling resources for the terminal device, and/or indicate that the terminal device supports access in multiple cells.

Optionally, in a case where the second information is used to indicate the base station to allocate uplink scheduling resources for the terminal device, the processor 900 is further configured to read the program from the memory 920 and execute the following steps:
sending, through the transceiver 910, second uplink scheduling resource information to the terminal device based on the second information, wherein the second uplink scheduling resource information comprises at least one of scheduling information for MSG3 or uplink scheduling resources;
receiving, through the transceiver 910, the first information sent by the terminal device based on the second uplink scheduling resource information.

Optionally, the processor 900 is further configured to read the program from the memory 920 and execute the following step:
sending, through the transceiver 910, third information to the terminal device, wherein the third information comprises service information supported by different cells or frequency points, and/or the third information is used to indicate that the base station supports cooperative work.

Optionally, the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

Optionally, in the case where the first cell does not support the service, the access resource related information comprises at least one of:
cell information supporting the service;
frequency point information supporting the service;
a dedicated identifier or neighbor cell access resource;
the first uplink scheduling resource information comprises at least one of:
   scheduling information for an uplink message;
   uplink scheduling resources;
   a first indication bit, used to indicate the terminal device to continue receiving uplink scheduling resources;
   access indication information, used to indicate whether the terminal device performs access in the first cell and other cells;
   cell registration information.

Optionally, the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the desired cell is activated;
access indication information, used to indicate whether the terminal device performs access in the first cell and other cells;
cell registration information.

The base station provided in the embodiments of the present disclosure can execute the method embodiment shown in FIG. 3, and its implementation principle and technical effect are similar, so details are not repeated here.

In addition, the computer-readable storage medium of the embodiments of the present disclosure is used to store a computer program, and the computer program can be executed by a processor to implement the steps in the method embodiments shown in FIG. 2 or FIG. 3.

In the several embodiments provided in the present disclosure, it should be understood that the disclosed methods and apparatuses may be implemented in other ways. For example, the apparatus embodiments described above are merely illustrative. For example, the division of units is only a logical function division. In actual implementation, there may be other division methods. For example, multiple units or components may be combined or integrated into another system, or some features may be ignored or not executed. In addition, the mutual coupling or direct coupling or communication connection shown or discussed may be indirect coupling or communication connection through some interfaces, devices, or units, and may be electrical, mechanical, or other forms.

In addition, each functional unit in each embodiment of the present disclosure may be integrated into one processing unit, or each unit may exist separately physically, or two or more units may be integrated into one unit. The above integrated unit may be implemented in the form of hardware or in the form of hardware plus software functional units.

The integrated unit implemented in the form of a software functional unit may be stored in a computer-readable storage medium. The above software functional unit is stored in a storage medium and includes several instructions for causing a computer device (which may be a personal computer, a server, or a network device, etc.) to perform part of the steps of the transceiving method described in the various embodiments of the present disclosure. The aforementioned storage medium includes: a U disk, a mobile hard disk, a Read-Only Memory (ROM), a Random Access Memory (RAM), a magnetic disk, or an optical disk, and other media that can store program codes.

The above are preferred implementations of the present disclosure. It should be noted that for those of ordinary skill in the art, several improvements and modifications can be made without departing from the principles described in the present disclosure, and these improvements and modifications should also be regarded as the protection scope of the present disclosure.

## Claims

1. A method for network access, performed by a terminal device, the method comprising:
when the terminal device is about to initially access a network, sending first information to a base station, wherein the first information is used to indicate access request related information; and
receiving a first feedback message sent by the base station, wherein the first feedback message is determined based on the first information, and the first feedback message carries access resource related information.

2. The method according to claim 1, wherein the access request related information comprises at least one of: a service requested by the terminal device, a frequency point that the terminal device desires to access, or a cell that the terminal device desires to access.

3. The method according to claim 1, wherein the access resource related information comprises at least one of: cell access resource information, first uplink scheduling resource information, or cell registration information.

4. The method according to claim 1, wherein the access resource related information comprises cell access resource information, and the cell access resource information comprises at least one of access resource information of a first cell or access resource information of a second cell, wherein the first cell is a serving cell corresponding to the base station, and the second cell is another cell other than the first cell.

5. The method according to claim 4, wherein the method further comprises:
performing network access based on the cell access resource information;
or wherein the access resource related information comprises first uplink scheduling resource information, and the method further comprises:
sending a resource acquisition request to the base station based on the first uplink scheduling resource information;
receiving the cell access resource information comprising the access resource information of the second cell sent by the base station, wherein the second cell is another cell other than the serving cell corresponding to the base station;
performing network access based on the cell access resource information.

6. The method according to any one of claims 1 to 5, wherein the first information is carried in message MSG1, MSG3, or MSG5.

7. The method according to claim 6, wherein the first information is indicated by a preconfigured preamble and/or a Random Access Channel (RACH) resource in MSG1;
or wherein the first information is indicated by a designated field in MSG3, wherein the designated field comprises at least one of: a designated Logical Channel Identity (LCID), a designated bit, or a designated bit sequence;
or wherein the first information is carried in terminal capability information and/or a Scheduling Request (SR) in MSG5.

8. The method according to claim 1, wherein before sending the first information to the base station, the method further comprises:
sending second information to the base station, wherein the second information is used to indicate the base station to allocate uplink scheduling resources for the terminal device, and/or to indicate that the terminal device supports access in multiple cells;
in a case where the second information is used to indicate the base station to allocate uplink scheduling resources for the terminal device, the method further comprises:
receiving second uplink scheduling resource information sent by the base station, wherein the second uplink scheduling resource information comprises at least one of scheduling information for MSG3 or an uplink scheduling resource;
the sending the first information to the base station comprises:
sending the first information to the base station based on the second uplink scheduling resource information.

9. The method according to claim 1, wherein before sending the first information to the base station, the method further comprises:
receiving third information sent by the base station, wherein the third information comprises service information supported by different cells or frequency points, and/or the third information is used to indicate that the base station supports cooperative work;
the sending the first information to the base station comprises:
sending the first information to the base station based on the third information.

10. The method according to any one of claims 1 to 5, wherein the first information comprises the service requested by the terminal device;
in a case where a first cell supports the service, the first feedback message is sent through a Random Access Response (RAR) or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

11. The method according to claim 10, wherein in the case where the first cell does not support the service, the access resource related information comprises at least one of:
cell information supporting the service;
frequency point information supporting the service;
a dedicated identifier or neighbor cell access resource;
scheduling information for an uplink message;
uplink scheduling resources;
a first indication bit, used to indicate the terminal device to continue receiving uplink scheduling resources;
access indication information, used to indicate whether the terminal device performs access in the first cell and other cells; or
cell registration information.

12. The method according to any one of claims 1 to 5, wherein the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the cell that the terminal device desires to access is activated;
access indication information, used to indicate whether the terminal device performs access in a first cell and other cells, wherein the first cell is a serving cell corresponding to the base station; or
cell registration information.

13. The method according to claim 5, wherein the performing network access based on the cell access resource information comprises at least one of:
in a case where the cell access resource information only comprises the access resource information of the first cell, accessing the first cell based on the access resource information of the first cell;
in a case where the cell access resource information only comprises the access resource information of the second cell, terminating access to the first cell, and accessing the second cell based on the access resource information of the second cell;
in a case where the cell access resource information comprises the access resource information of the first cell and the access resource information of the second cell, accessing the first cell and the second cell respectively based on the access resource information of the first cell and the access resource information of the second cell.

14. The method according to claim 5, wherein the cell access resource information only comprises the access resource information of the second cell;
the performing network access based on the cell access resource information comprises:
initiating an access request to the second cell, wherein the access request carries fourth information, and the fourth information is used to indicate that the access request is initiated based on an indication from a cell other than the second cell.

15. A method for network access, performed by a base station, the method comprising:
receiving first information sent by a terminal device, wherein the first information is used to indicate access request related information;
determining a first feedback message according to the first information, wherein the first feedback message carries access resource related information; and
sending the first feedback message to the terminal device.

16. The method according to claim 15, wherein the access request related information comprises at least one of: a service requested by the terminal device, a frequency point that the terminal device desires to access, or a cell that the terminal device desires to access.

17. The method according to claim 15, wherein the access resource related information comprises at least one of: cell access resource information, first uplink scheduling resource information, or cell registration information.

18. The method according to claim 17, wherein the cell access resource information comprises at least one of access resource information of a first cell or access resource information of a second cell, wherein the first cell is a serving cell corresponding to the base station, and the second cell is another cell other than the first cell.

19. The method according to claim 18, wherein the determining a first feedback message according to the first information comprises:
determining the cell access resource information or the first uplink scheduling resource information according to the first information;
the sending the first feedback message to the terminal device comprises:
sending the first feedback message carrying the cell access resource information or the first uplink scheduling resource information to the terminal device;
or wherein the determining a first feedback message according to the first information comprises:
determining the cell access resource information according to the first information;
the sending the first feedback message to the terminal device comprises:
initiating access registration of the terminal device to the cell corresponding to the cell access resource information, and sending the first feedback message carrying cell registration information to the terminal device, wherein the cell registration information is registration information of the cell corresponding to the cell access resource information.

20. The method according to claim 19, wherein in a case where the first feedback message carries the first uplink scheduling resource information, after sending the first feedback message to the terminal device, the method further comprises:
receiving a resource acquisition request sent by the terminal device based on the first uplink scheduling resource information; and
in response to the resource acquisition request, sending cell access resource information comprising access resource information of the second cell to the terminal device.

21. The method according to any one of claims 15 to 20, wherein the first information is carried in MSG1, MSG3, or MSG5.

22. The method according to claim 21, wherein the first information is indicated by a preconfigured preamble and RACH resource in MSG1;
or wherein the first information is indicated by a designated field in MSG3, wherein the designated field comprises at least one of a designated Logical Channel Identity (LCID), a designated bit or a designated bit sequence;
or wherein the first information is carried in terminal capabilities and/or a Scheduling Request (SR) in MSG5.

23. The method according to claim 15, wherein before receiving the first information sent by the terminal device, the method further comprises:
receiving second information sent by the terminal device, wherein the second information is used to indicate the base station to allocate uplink scheduling resources for the terminal device, and/or indicate that the terminal device supports access in multiple cells.

24. The method according to claim 23, wherein in a case where the second information is used to indicate the base station to allocate uplink scheduling resources for the terminal device, the method further comprises:
sending second uplink scheduling resource information to the terminal device based on the second information, wherein the second uplink scheduling resource information comprises at least one of scheduling information for MSG3 or uplink scheduling resources;
the receiving first information sent by a terminal device comprises:
receiving the first information sent by the terminal device based on the second uplink scheduling resource information.

25. The method according to claim 15, wherein before receiving the first information sent by the terminal device, the method further comprises:
sending third information to the terminal device, wherein the third information comprises service information supported by different cells or frequency points, and/or the third information is used to indicate that the base station supports cooperative work.

26. The method according to any one of claims 15 to 19, wherein the first information comprises the service requested by the terminal device;
in a case where a first cell supports the service, the first feedback message is sent through an RAR or MSG4, and the access resource related information comprises at least the access resource information of the first cell, wherein the first cell is a serving cell corresponding to the base station;
in a case where the first cell does not support the service, the first feedback message is sent through an RAR, MSG4, or a first downlink message, and the access resource related information comprises at least one of access resource information of a second cell, first uplink scheduling resource information, or cell registration information, wherein the second cell is another cell other than the first cell, and the cell registration information is registration information in the second cell.

27. The method according to claim 26, wherein in the case where the first cell does not support the service, the access resource related information comprises at least one of:
cell information supporting the service;
frequency point information supporting the service; or
a dedicated identifier or neighbor cell access resource;
the first uplink scheduling resource information comprises at least one of:
scheduling information for an uplink message;
uplink scheduling resources;
a first indication bit, used to indicate the terminal device to continue receiving uplink scheduling resources;
access indication information, used to indicate whether the terminal device performs access in the first cell and other cells; or
cell registration information.

28. The method according to any one of claims 15 to 19, wherein the first information comprises a frequency point that the terminal device desires to access and/or a cell that the terminal device desires to access;
the access resource related information comprises at least one of:
accessible cell information;
accessible frequency point information;
scheduling information for an uplink message;
an indication of whether the cell that the terminal device desires to access is activated;
access indication information, used to indicate whether the terminal device performs access in a first cell and other cells, wherein the first cell is a serving cell corresponding to the base station; or
cell registration information.

29. An apparatus for network access, provided in a terminal device, the apparatus comprising:
a first sending module, configured to, when the terminal device is about to initially access a network, send first information to a base station, wherein the first information is used to indicate access request related information; and
a first receiving module, configured to receive a first feedback message sent by the base station, wherein the first feedback message is determined based on the first information, and the first feedback message carries access resource related information.

30. An apparatus for network access, provided in a base station, the apparatus comprising:
a fifth receiving module, configured to receive first information sent by a terminal device, wherein the first information is used to indicate access request related information;
a determining module, configured to determine a first feedback message according to the first information, wherein the first feedback message carries access resource related information; and
a fourth sending module, configured to send the first feedback message to the terminal device.

31. A terminal device, comprising a transceiver and a processor, wherein
the transceiver is configured to, when the terminal device is about to initially access a network, send first information to a base station, wherein the first information is used to indicate access request related information; and
the transceiver is further configured to receive a first feedback message sent by the base station, wherein the first feedback message is determined based on the first information, and the first feedback message carries access resource related information.

32. A base station, comprising a transceiver and a processor, wherein
the transceiver is configured to receive first information sent by a terminal device, wherein the first information is used to indicate access request related information;
the processor is configured to determine a first feedback message according to the first information, wherein the first feedback message carries access resource related information; and
the transceiver is further configured to send the first feedback message to the terminal device.

33. A terminal device, comprising: a transceiver, a memory, a processor, and a computer program stored on the memory and executable on the processor; wherein the processor is configured to read the program from the memory to implement the steps in the method for network access according to any one of claims 1 to 14.

34. A base station, comprising: a transceiver, a memory, a processor, and a computer program stored on the memory and executable on the processor; wherein the processor is configured to read the program from the memory to implement the steps in the method for network access according to any one of claims 15 to 28.

35. A computer-readable storage medium having stored thereon a computer program that when executed by a processor, implements the steps in the method for network access according to any one of claims 1 to 14, or implements the steps in the method for network access according to any one of claims 15 to 28.

36. A computer program product, comprising a computer program that when executed by a processor, implements the steps in the method for network access according to any one of claims 1 to 14; or implements the steps in the method for network access according to any one of claims 15 to 28.
